# EUROPÄISCHE PATENTSCHRIFT

(11) **EP 1 264 127 B1**
(45) Veröffentlichungstag und Bekanntmachung des Hinweises auf die Patenterteilung: **05.11.2003**
(21) Anmeldenummer: 01916956.4
(22) Anmeldetag: 26.01.2001
(51) Int. Cl.: F16K 5/04

(54) **DREHBARER ABSPERRHAHN FÜR EINE STECKKUPPLUNG MIT ABGEWINKELTEM ANSCHLUSSSTUTZEN**
ROTATABLE STOPCOCK FOR A MALE COUPLING HAVING A 90o OFFSET CONNECTING PIECE
ROBINET D'ARRET ROTATIF POUR EMBOUT D'ENFICHAGE AVEC RACCORD COUDE

(30) Priorität: 17.02.2000 DE 10007204
(43) Veröffentlichungstag der Anmeldung: 11.12.2002
(73) Patentinhaber: A. Raymond & Cie, 38028 Grenoble (FR)
(72) Erfinder: MORETTI, Erminio, F-38000 Grenoble (FR); PERRIN, Gilles, F-38130 Echirolles (FR)
(74) Vertreter: Kirchgaesser, Johannes, Dipl.-Ing.
(86) Internationale Anmeldenummer: EP0100874
(87) Internationale Veröffentlichungsnummer: WO01061223

(56) Entgegenhaltungen:
- EP-A- 0 621 052
- DE-A- 2 011 660
- DE-A- 2 843 370
- DE-A- 19 728 234
- US-A- 2 854 027
- US-A- 4 750 707
- US-A- 4 778 152
- US-A- 4 809 949
- US-A- 4 854 545

## Beschreibung

Die Erfindung betrifft einen drehbaren Absperrhahn für eine Steckkupplung mit abgewinkeltem Anschlußstutzen von Flüssigkeitsleitungen und einem Eingriffsloch in Verlängerung einer der beiden Leitungen zum Einführen eines mit dem Absperrhahn verbundenen Hohlstiftes, durch den in den beiden Endstellungen des drehbaren Absperrhahnes die Verbindung zwischen dem Kupplungsgehäuse und dem Anschlußstutzen einmal hergestellt und einmal unterbrochen ist, wobei der Hohlstift hinter seinem die Verbindung herstellenden bzw. unterbrechenden Bereich mit einem Dichtring gegen das Eingriffsloch des Kupplungsgehäuses abgedichtet und mit einem Drehknopf versehen ist, welcher in axialer Richtung des Eingriffslochs zum Kupplungsgehäuse festlegbar ist, wozu an seiner Stirnwand zwei einander gegenüberliegende Ringsegmente angeformt sind, die konzentrisch zur Gehäusewand verlaufen und mit nach innen gerichteten Rastnasen versehen sind, die beim Einführen des Hohlstiftes in das Eingriffsloch nach elastischer Auffederung der Ringsegmente einen an der Gehäusewand angeformten, das Eingriffsioch konzentrisch umgebenden Flanschring formschlüssig hintergreifen.

Durch die **US 4 854 545** ist eine Absperrhahn in Verbindung mit einem Anschlußstutzen und einer rechtwinklig weiterführenden Leitung bekannt. Der Hohlstift ist zweitei lig ausgeführt und weist ein um 90° abgeknicktes Durchgangsloch auf; er ist mittels einer Muffe und einer Überwurfmutter in axialer Richtung des Eingriffsloches festgelegt und ragt mit einem abgeflachten, zylindrischen Stab aus der Muffe hervor. Auf diesen Stab ist ein Drehknopf aufgeschoben und mittels einer Schraube befestigt.

Dieser Absperrhahn besteht somit aus einer Vielzahl von Einzelteilen, welche zum bestimmungsgemäßen Einsatz des Hahnes zusammengefügt bzw. mit dem Gehäuse des Anschlußstutzens verbunden werden müssen, was wiederum mit hohen Produktions- und Montagekosten verbunden ist.

Bei Steckkupplungen für Flüssigkeitsleitungen, welche von Kraftstoff durchflossen werden, ist es insbesondere vor dem Öffnen der Kupplung wichtig, dass der Kraftstofffluss mittels eines Absperrhahns vorher unterbrochen wird. Dies ließe sich zwar auch durch Einsatz des bekannten Absperrventils erreichen, doch wären hierfür, wie bereits dargelegt, eine Vielzahl von Einzelteilen sowie deren Zusammenbau nötig.

Ein weiterer Nachteil dieses bekannten Absperrhahns ist, dass er sich in keiner seiner Endstellungen gegen unbeabsichtigtes Verdrehen arretieren lässt. Diese Möglichkeit wäre besonders bei Steckkupplungen für Flüssigkeitsleitungen, welche von Kraftstoff durchflossen sind, von Vorteil.

Durch die **US 4 750 707** ist ein drehbarer Absperrhahn bekannt, der aus weniger Einzelteilen besteht und dessen Montage in der zugehörigen Steckkupplung mit abgewinkelten Flüssigkeitsleitungen einfacher auszuführen ist. Er besteht aus einem Stift, der in zwei verschiedenen Drehstellungen die Verbindung zwischen den Flüssigkeitsleitungen herstellt bzw. unterbricht und an seinem einen Ende einen Drehknopf aufweist. Vom Umfang des Drehknopfes erstrecken sich konzentrisch zum Stift zwei einander gegenüberliegende Ringsegmente, die an ihren freien Enden nach innen gerichtete Rastnasen aufweisen. Beim Einführen des Absperrhahns bzw. seines Stiftes in das Eingriffsloch der Steckkupplung hintergreifen die Rastnasen nach elastischer Auffederung der Ringsegmente formschlüssig einen an der Gehäusewand der Steckkupplung vorgesehenen Flanschring. Die beiden Endstellungen des Absperrhahns für unterbrochenen bzw. freien Durchtritt des Mediums sind zwar durch an der Gehäusewand und am Drehknopf vorgesehene Anschläge definiert, eine Arretierung des Absperrhahns in wenigstens einer der beiden Endstellungen ist aber auch hier nicht vorgesehen.

Aufgabe der Erfindung ist es daher, einen Absperrhahn für eine Steckkupplung der eingangs beschriebenen Art zu schaffen, welcher billig herzustellen, im Eingriffsloch der Steckkupplung einfach zu montieren und leicht zu handhaben ist und der sich in mindestens einer seiner Funktionsstellungen gegen unbeabsichtigtes Verdrehen arretieren lässt.

Dies wird erfindungsgemäß dadurch erreicht, dass am Drehknopf im Bereich zwischen den beiden Ringsegmenten ein ebenfalls an der Gehäusewand vorbeilaufender Rastarm vorgesehen ist, welcher an seinem elastisch auffederbaren Ende in die Richtung der abgewinkelten Flüssigkeitsleitungen weist und an seiner Innenseite mit zwei Rastzähnen versehen ist, welche mit einem an der Gehäusewand des Kupplungsgehäuses angeformten Rastzacken im geöffneten Zustand des Absperrhahns derart zusammenwirken, dass der Drehknopf in der Öffnungsposition des Absperrhahns arretiert ist. Dadurch lässt sich der Absperrhahn nur unter Überwindung eines gewissen Widerstandes beim Auffedern des Rastarmes aus seiner Öffnungsstellung heraus drehen, so dass ein unbeabsichtigtes Verdrehen des Absperrhahns sicher verhindert wird.

Der Absperrhahn lässt sich einfach und sicher im Gehäuse der Steckkupplung montieren, und der Strömungsdurchfluss durch die Steckkupplung lässt sich schnell und zuverlässig, aber eben nur beabsichtigt, unterbrechen und genauso einfach wieder freigeben.

Wenn die Rastflächen der an den Ringsegmenten ausgebildeten Rastnasen gegenüber der radialen Anlagefläche des zu hintergreifenden Flanschrings entgegen der Aufsteckrichtung des Drehknopfes einen Winkel größer als 90° bilden, kann ein Herausdrücken des Absperrhahns aus dem Eingriffsloch infolge starken Flüssigkeitsdrucks sicher vermieden werden.

Zum leichten Ergreifen und Drehen des Drehknopfes sind die an ihm ausgebildeten Ringsegmente an der Außenwand üblicherweise geriffelt oder gerippt.

Zum leichten Ergreifen und Drehen des Drehknopfs sind die Ringsegmente an der Außenwand üblicherweise geriffelt oder gerippt. Um den Drehknopf in der Öffnungsstellung eindeutig festzulegen, ist nach einer weiteren Ausgestaltung der Erfindung zwischen den beiden Ringsegmenten ein an der Außenwand vorbeilaufender Rastarm mit zwei nach innen abstehenden Rastzähnen vorgesehen, welche mit einem an der Außenwand des Kupplungsgehäuses angeformten Rastzacken so zusammenwirken, daß der Drehknopf in der Öffnungsposition des Absperrhahns arretiert wird.

In der Zeichnung ist ein Ausführungsbeispiel des erfindungsgemäßen Absperrhahns dargestellt, welches nachfolgend näher erläutert wird. Es zeigt
- Fig. 1: eine Steckkupplung mit abgewinkeltem Anschlußstutzen und Absperrhahn in Seitenansicht mit Teilschnitt durch den Hahn,
- Fig. 2: die gleiche Steckkupplung mit Absperrhahn in Draufsicht,
- Fig. 3: eine Vorderansicht zu Figur 1 mit Blick auf den Absperrhahn in Schließstellung,
- Fig. 4: die gleiche Vorderansicht mit Absperrhahn in Öffnungsstellung
- Fig. 5: das Kupplungsgehäuse in perspektivischer Darstellung,
- Fig. 6: der Absperrhahn in perspektivischer Darstellung,
- Fig. 7: ein leeres Kupplungsgehäuse im Längsschnitt,
- Fig. 8: das zugehörige Absperrventil im Längsschnitt,
- Fig. 9: einen Schnitt durch das Absperrventil gemäß Linie IX - IX in Figur 8
- Fig. 10: das Kupplungsgehäuse wie in Figur 6 mit eingesetztem Absperrventil in Öffnungsstellung und
- Fig. 11: das Kupplungsgehäuse mit eingesetztem Absperrventil wie in Figur 10, jedoch um 90° verdreht.

Der in den Figuren mit **1** bezeichnete Absperrhahn dient zum Öffnen bzw. Verschließen des Flüssigkeitsdurchflusses in einer Steckkupplung **2,** die mit einem um 90° abgewinkelten Stutzen **3** zum Anschluß einer nicht dargestellten Flüssigkeitsleitung versehen ist. Die Steckkupplung **2** weist im vorliegenden Ausführungsbeispiel auf der linken Seite eine Öffnung **4** zum Einführen eines nicht dargestellten Einsteckteils auf, welches in bekannter Weise mit einer umlaufenden Halterippe kurz vor dem Einführende versehen und in der Kupplungsöffnung **4** verrastbar ist.

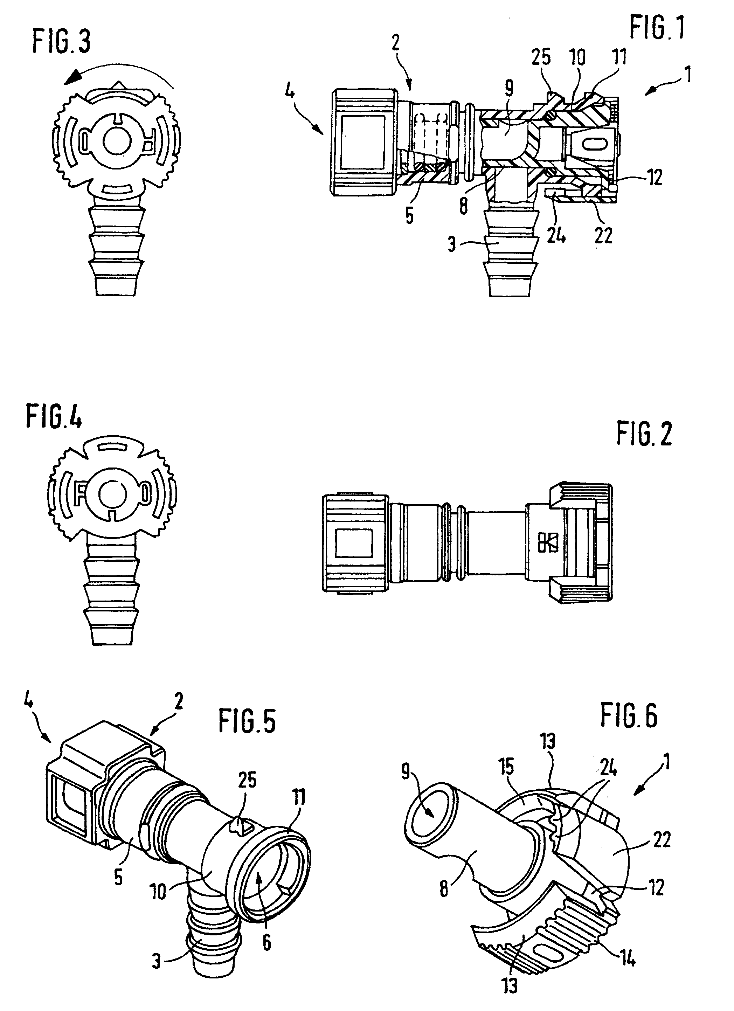

Wie aus dem in Figur 5 perspektivisch dargestellten Kupplungsgehäuse **5** ersichtlich, ist in axialer Verlängerung der Einstecköffnung **4** ein Eingriffsloch **6** zur drehbaren Einlagerung des in Figur 6 ebenfalls perspektivisch dargestellten Absperrhahns **1** vorgesehen.

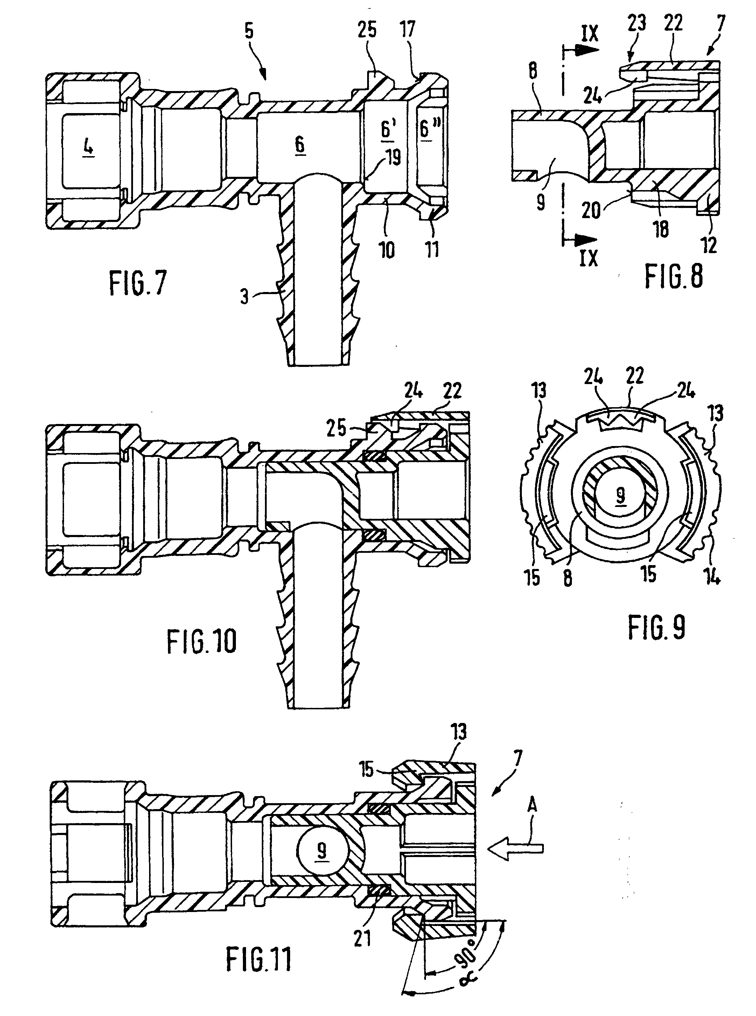

Während das Kupplungsgehäuse **5** sowohl aus hartem Kunststoff als auch aus einer geeigneten Metallegierung im Spritzgießverfahren hergestellt werden kann, ist der Absperrhahn **1** einstückig aus hartelastischem Kunststoff hergestellt. Er besteht, wie aus **Figuren 8 und 9** erkennbar ist, aus einem Drehknopf **7** mit einem daran angeformten Hohlstift **8,** welcher mit einem zentralen, um 90° abgewinkelten Durchformten Hohlstift **8,** welcher mit einem zentralen, um 90° abgewinkelten Durchgangsloch **9** versehen ist. Dieses tritt an der Stirnseite in axialer Verlängerung der Einführöffnung **4** ein und in axialer Verlängerung des Anschlußstutzens **3** um 90° abgewinkelt wieder aus.

Der Hohlstift **8** ist in seinem Außendurchmesser dem Innendurchmesser des Eingriffslochs **6** im Bereich beiderseits des Anschlußstutzens **3** angepaßt und gegenüber diesem Lochbereich drehbar gelagert. Das Eingriffsloch **6** besitzt zum Einführbereich hin eine abgestufte Locherweiterung **6',** und schließt mit einer konischen Locherweiterung **6"** ab.

Die Gehäusewand **10** weist am Ende der konischen Erweiterung 6" einen umlaufenden Ringflansch **11** auf, welcher zur axialen Festlegung des Absperrhahns **1** zum Kupplungsgehäuse **5** dient.

An der Stirnwand **12** des Drehknopfes **7** sind zwei einander gegenüberliegende Ringsegmente **13** angeformt, welche konzentrisch zur Außenwand **10** des Gehäuses **5** verlaufen. Diese Ringsegmente sind nach außen hin mit einer Riffelung **14** versehen, damit sich der Drehknopf **7** leichter ergreifen und drehen läßt. Die Ringsegmente **13** sind an der Innenseite mit Rastnasen **15** versehen, welche beim Einführen des Hohlstiftes **8** in das Eingriffsloch **6** nach elastischer Auffederung der Ringsegmente **13** über den Flanschring **11** gleiten und diesen dann, wie aus **Figur 11** erkennbar, formschlüssig hintergreifen.

Um ein Herausdrücken des Absperrhahns **1** aus dem Eingriffsloch **6** infolge starken Flüssigkeitsdrucks mit Sicherheit auszuschließen, bilden die Rastflächen **16** der Rastnasen **15** gegenüber der radialen Anlagefläche **17** des Flanschrings **11** einen Winkel α größer als 90° entgegen der Aufsteckrichtung **"A"** des Drehknopfes **7.**

Entsprechend der abgestuften Erweiterung **6'** im Eingriffsloch **6** weist der Hohlstift **8** zur Stirnwand **12** hin in seinem Außendurchmesser ebenfalls eine Erweiterungsstufe **18** auf, wobei zwischen den einander gegenüberliegenden, radialen Ringflächen **19** und **20** ein Dichtring **21** eingebaut ist, welcher den Flüssigkeitsaustritt am Drehknopf **7** verhindern soll.

Um die Lage des Absperrhahns in seiner Öffnungsposition besser fixieren zu können, ist am Drehknopf **7** im Bereich zwischen den beiden Ringsegmenten **13** an der Stirnwand **12** ein weiterer Rastarm **22** vorgesehen, welcher ebenfalls an der Außenwand **10** vorbeiläuft und mit seinem auffederbaren Ende **23** in die Richtung des abgeknickten Durchgangsloches **9** weist. Der Rastarm **22** ist ferner an seiner Innenseite, wie aus **Figur 9** ersichtlich, mit zwei Rastzähnen **24** versehen. Auf der Gehäusewand **10** befindet sich im gleichen Abstand von dem Ringflansch **11** ein Rastzacken **25,** welcher zu den Rastzähnen **24** des Rastarm **22** so ausgerichtet ist, daß der Drehknopf **7** in der Öffnungsposition ( **vgl. Figur 10 )** des Absperrhahns arretiert wird.

### Bezugszeichenliste

- 1: Absperrhahn
- 2: Steckkupplung
- 3: Anschlußstutzen
- 4: Einführöffnung
- 5: Kupplungsgehäuse
- 6: Eingriffsloch
- 6': Abgestufte Locherweiterung
- 6": Konische Locherweiterung
- 7: Drehknopf
- 8: Hohlstift
- 9: Abgeknicktes Durchgangsloch
- 10: Gehäusewand
- 11: Umlaufender Flanschring
- 12: Stirnwand
- 13: Ringsegmente
- 14: Riffelung
- 15: Rastnasen
- 16: Rastflächen
- 17: Anlagefläche
- 18: Erweiterungsstufe
- 19: radiale Ringfläche (von 6 zu 6')
- 20: radiale Ringfläche (von 8 zu 18)
- 21: Dichtring
- 22: Rastarm
- 23: Auffederbares Ende
- 24: Rastzähne
- 25: Rastzacken

## Patentansprüche

1. Drehbarer Absperrhahn für eine Steckkupplung (2) mit abgewinkeltem Stutzen (3) zum Anschluss von Flüssigkeitsleitungen und einem Eingriffsloch (6) in Verlängerung einer der beiden Leitungen zum Einführen eines mit dem Absperrhahn (1) verbundenen Hohlstiftes (8), durch den in den beiden Endstellungen des drehbaren Absperrhahns (1) die Verbindung zwischen dem Kupplungsgehäuse (5) und dem Anschlußstutzen (3) einmal hergestellt und einmal unterbrochen ist, wobei der Hohlstift (8) hinter seinem die Verbindung herstellenden bzw. unterbrechenden Bereich mit einem Dichtring (21) gegen das Eingriffsloch (6) des Kupplungsgehäuses (5) abgedichtet und mit einem Drehknopf (7) versehen ist, welcher in axialer Richtung des Eingriffelochs (6) zum kupplungsgehäuse (5) festlegbar ist, wozu an seiner Stirnwand (12) zwei einander gegenüberliegende Ringsegmente (13) angeformt sind, die konzentrisch zur Gehäusewand (10) verlaufen und mit nach innen gerichteten Rastnasen (15) versehen sind, die beim Einführen des Hohlstiftes (8) in das Eingriffsloch (6) nach elastischer Auffederung der Ringsegmente (13) einen an der Gehäusewand (10) angeformten, das Eingriffsloch (6) konzentrisch umgebenden Flanschring (11) formschlüssig hintergreifen, **dadurch gekennzeichnet, dass** am Drehknopf (7) im Bereich zwischen den beiden Ringsegmente (13) ein ebenfalls an der Gehäusewand (10) vorbeilaufender Rastarm (22) vorgesehen ist, welcher an seinem elastisch auffederbaren Ende (23) in die Richtung der abgewinkelten Flüssigkeitsleitungen weist und an seiner Innenseite mit zwei Rastzähnen (24) versehen ist, welche mit einem an der Gehäusewand (10) des Kupplungsgehäuses (5) angeformten Rastzacken (25) im geöffneten Zustand des Absperrhahnes (1) derart zusammenwirken, dass der Drehknopf (7) in der Öffnungsposition des Absperrhahnes (1) arretiert ist.

2. Absperrhahn nach Anspruch 1, **dadurch gekennzeichnet, dass** die Rastflächen (16) der Rastnasen (15) gegenüber der radialen Anlagefläche (17) des Flanschrings (11) entgegen der Aufsteckrichtung des Drehknopfes (7) einen Winkel α größer als 90° bilden.

## Claims

1. Rotatable stopcock for a male coupling (2) with a 90°-offset piece (3) for connecting fluid lines and a contact hole (6) along the extension of one of the two lines for inserting a female pin (8) connected to the stopcock (1), by which female pin, in the two end positions of the rotatable stopcock (1), the connection between the coupling housing (5) and the connecting piece (3) is sometimes created and sometimes broken, wherein the female pin (8), behind its zone creating or breaking the connection, is sealed off with a sealing ring (21) from the contact hole (6) of the coupling housing (5) and is provided with a rotary . knob (7) which can be fixed to the coupling housing (5) in axial direction of the contact hole (6), for which purpose two annular segments (13) lying opposite each other are moulded onto its front wall (12), which run concentrically to the housing wall (10) and are provided with inwardly directed detent catches (15) which, upon insertion of the female pin (8) into the contact hole (6), after elastic expansion of the annular segments (13), engage in form-locking manner behind a flange ring (11) moulded onto the housing wall (10) and concentrically surrounding the contact hole (6), **characterized in that** there is provided on the rotary knob (7) in the area between the two annular segments (13) a detent arm (22) which also runs past the housing wall (10) and which, at its elastically expandable end (23), points in the direction of the 90°-offset fluid lines and is provided on its inside with two detent teeth (24) which cooperate with a detent projection (25) moulded onto the housing wall (10) of the coupling casing (5) in the opened state of the stopcock (1) such that the rotary knob (7) is locked in the open position of the stopcock (1).

2. Stopcock according to claim 1, **characterized in that** the detent surfaces (16) of the detent catches (15) form an angle α greater than 90° relative to the radial stop surface (17) of the flange ring (11) against the direction of fitting of the rotary knob (7).

## Revendications

1. Robinet d'arrêt tournant pour un système d'accouplement rapide (2), muni d'une tubulure de raccordement coudée en angle droit (3) pour le raccordement de conduites véhiculant des liquides et d'un orifice de mise en prise (6) disposé dans le prolongement d'une des deux conduites pour l'insertion d'une tige creuse (8) reliée au robinet d'arrêt (1), au moyen de laquelle, dans les deux positions extrêmes du robinet d'arrêt tournant (1), la liaison entre l'élément femelle (5) du système d'accouplement et la tubulure de raccordement (3) est dans une position établie et dans l'autre position interrompue, la tige creuse (8) étant en l'occurrence rendue étanche vis à vis de l'orifice de mise en prise (6) de l'élément femelle (5) au moyen d'une bague d'étanchéité (21) disposée en aval de sa portion d'établissement et d'interruption de la liaison et munie d'un bouton tournant (7) qui est susceptible d'être immobilisé en position dans le sens axial de l'orifice de mise en prise (6) par rapport à l'élément femelle (5) du système d'accouplement, deux segments annulaires (13) diamétralement opposés étant, pour ce faire, réalisés solidaires par moulage de sa paroi antérieure (12), qui sont disposés de manière concentrique par rapport à la paroi (10) de l'élément femelle et qui sont munis d'ergots d'encastrement (15) orientés vers l'intérieur qui, lors de l'insertion de la tige creuse (8) dans l'orifice de mise en prise (6), après le cédage par déformation élastique des segments annulaires (13) viennent, par l'action mécanique résultant de leur forme, cramponner par derrière un bourrelet annulaire (11) réalisé solidaire par moulage de la paroi (10) de l'élément femelle, entourant de manière concentrique l'orifice de mise en prise (6), **caractérisé en ce qu'**il est prévu, sur le bouton tournant (7), au niveau de la portion comprise entre les deux segments annulaires (13), un bras de cramponnement (22) passant également devant la paroi (10) de l'élément femelle qui, au niveau de son extrémité (23) capable de céder par déformation élastique, est orienté dans la direction des conduites de liquide coudées en angle droit et qui est muni, sur sa face intérieure, de deux dents d'accrochage (24), dont l'interaction d'encastrement avec un cran d'accrochage (25), réalisé solidaire par moulage de la paroi (10) de l'élément femelle (5) du système d'accouplement, est, lorsque le robinet d'arrêt (1) se trouve dans sa position d'ouverture, telle que le bouton tournant (7) est bloqué dans la position d'ouverture du robinet d'arrêt (1).

2. Robinet d'arrêt selon la revendication 1, **caractérisé en ce que** les faces d'accrochage (16) des ergots d'encastrement (15) forment un angle □□ supérieur à 90° par rapport à la surface d'assise radiale (17) du bourrelet annulaire (11) dans le sens contraire de celui de l'emmanchement du bouton tournant (7).
